# EUROPEAN PATENT APPLICATION

(11) **EP 3 323 847 A1**
(43) Date of publication of application: **23.05.2018**
(21) Application number: 16199596.4
(22) Date of filing: 18.11.2016
(51) Int. Cl.: C08J 5/18, C08K 5/05, C08K 5/06, C08K 5/09, C08K 5/101, C08L 23/10, C08J 3/22

(54) **METHOD FOR PREVENTING COLD FOG ON POLYPROPYLENE FILMS**

(71) Applicant: Akzo Nobel Chemicals International B.V., 6824 BM Arnhem (NL)
(72) Inventor: SPIJKERMAN, Geesje Klasina, NL-7421 AS Deventer (NL); ROOLVINK-VERHAAGEN, Maatje Gerharda, NL-7425 HN Deventer (NL); VAN DER SCHUUR, Jan Martijn, NL-7553 CE Hengelo (NL)
(74) Representative: Akzo Nobel Chemicals IP Group

(57) **Abstract**

Method for preventing fogging at temperatures in the range 0-10°C on a sheet or film made of polypropylene, said method involving the incorporation in said polypropylene of (i) an ethoxylated C₁₀₋₁₄ fatty acid with a molar average degree of ethoxylation in the range 2-3 and/or (ii) an ethoxylated C₁₀₋₁₄ fatty alcohol with a molar average degree of ethoxylation in the range 2-3.

## Description

This invention relates to the prevention of cold fog on the surface of polypropylene films or sheets.

A major application of polypropylene is food packaging. Polypropylene has a high resistance to moisture vapour transmission and high transparency, which is evidently essential for this application.

However, due to temperature changes between their packaging and their storage and sales locations, any water that evaporates from the food (e.g. meat or vegetables) condenses on the inner surface of the film. The water droplets form a fogged surface, thereby reducing the visual transparency of the film. This effect is generally called "fogging" or "clouding". Fogging leads to reduced light transmission, which negatively affects the visual inspection of the package.

In order to reduce fogging of polypropylene films or sheets, so-called antifog agents can be added to the polymer. These antifog agents can be coated on the film or sheet, or they can be incorporated in the film or sheet. Incorporation in the film is generally preferred over coating on the film because of the lower processing costs, the lower environmental impact (i.e. no coating solvents required), and the absence of a separate layer that can be wiped or washed off the surface.

The antifog action of the incorporated antifog agents is most likely due to the migration of the antifog agent to the film's surface, thereby enhancing the hydrophilicity of the surface and decreasing the surface tension of the water, which causes the water to form a continuous, visually clear film instead of a fogged surface comprising individual droplets of water.

Fogging may occur under relatively cold conditions (below ambient temperature, e.g. cold outside or refrigerator conditions) and relatively warm conditions (above ambient temperature, e.g. in warm humid outside conditions). The first are called cold fog conditions; the second are called hot fog conditions. In food packaging, cold fog is the major problem.

The antifog performance of different compounds differs largely per type of polymer. An antifog agent having good performance in polypropylene may have rather bad performance in polyethylene, and vice versa. Also the performance under cold and hot conditions may differ largely and appears rather unpredictable. An antifog agent having good cold fog performance in polypropylene does not automatically have good hot fog performance in the same polymer.

It has now been found that ethoxylated C₁₀₋₁₄ fatty acids and ethoxylated C₁₀₋₁₄ fatty alcohols, both with a molar average degree of ethoxylation in the range 2-3, have very good cold fog antifog performance in polypropylene.

The invention therefore relates to method for preventing fogging at temperatures in the range 0-10°C on a sheet or film made of polypropylene, said method involving the incorporation in said polypropylene of (i) an ethoxylated C₁₀₋₁₄ fatty acid with a molar average degree of ethoxylation in the range 2-3 and/or (ii) an ethoxylated C₁₀₋₁₄ fatty alcohol with a molar average degree of ethoxylation in the range 2-3.

It is noted that ethoxylated C₁₀₋₁₄ fatty acids and alcohols are known as antifog agents. For instance, JP 2004-210967 discloses an ethylene-α-olefin copolymer (e.g. LLDPE) food packaging film comprising an antifog agent composed of a diglycerol fatty acid ester, an ethoxylated C₈₋₂₂ fatty acid, and a polyglycerol (3-10) fatty acid ester. The specification refers to a fatty acid carbon number of 8-22 and a degree of ethoxylation of 1-100.

US 3,048,266 discloses ethoxylated C₁₂₋₂₂ fatty acids and alcohols as antifog agents in polyolefins, including polypropylene, which were tested for hot fog performance.

EP 2 216 362 discloses the use of a C₂₂ fatty acid with a degree of ethoxylation of 3 as antifog agent in LDPE at warm conditions.

The performance of these materials in other polymers and/or under warm conditions is, however, not predictive for their cold fog behavior in polypropylene.

The present invention also relates to a masterbatch of an antifog agent comprising 5-70 wt% of an ethoxylated C₁₀₋₁₄ fatty acid and/or alcohol with a molar average degree of ethoxylation in the range 2-3 and 30-95 wt% of a polymeric matrix.

Such masterbatch preferably comprises the ethoxylated C₁₀₋₁₄ fatty acid and/or alcohol in a concentration of 5-70 wt%, more preferably 10-50 wt%, most preferably 20-40 wt%.

Suitable polymers for such polymeric matrix are any polymers that are compatible with polypropylene and can be dispersed in polypropylene. Examples thereof are polypropylene (PP), random- and block-copolymers of ethylene and propylene, and polymers obtained from propylene copolymerized with minimal amounts of other mono-olefinic monomers such as butene, isobutylene, acrylic acids, esters of acrylic acids, styrene or combinations thereof.

The preferred polymer is polypropylene.

In one embodiment, the ethoxylated fatty acid and/or alcohol is obtained by ethoxylation of a fatty acid with ethylene oxide. Ethoxylation processes are well known to those skilled in the art and preferably involve the treatment of fatty acid with ethylene oxide under high pressure and temperature in the presence of a base catalyst. The molar average degree of ethoxylation of the resulting material can be controlled by the amount ethylene oxide, as is also well known by the skilled person.

In another embodiment, the ethoxylated fatty acid and/or alcohol is obtained by reacting the fatty acid and/or alcohol with polyethylene glycol; said polyethylene glycol having the desired molar average degree of ethoxylation.

The molar average degree of ethoxylation of the fatty acid and/or alcohol is in the range of 2.0 to 3.0, which means that the product obtained by the ethoxylation reaction contains, on average, 2.0 to 3.0 mole of ethylene oxide per mole of initial fatty acid and/or fatty alcohol. This average degree of ethoxylation can be determined by determining the hydroxyl value of the material. This value can be determined by a titration method. According to this method, a solution of phthalic anhydride in pyridine is added to a sample of ethoxylated fatty acid and/or alcohol. Hydroxyl groups in the sample react under enhanced temperature with phthalic anhydride. The reaction is catalysed by 4-dimethyl-aminopyridine. The phthalic anhydride that has not been consumed by the sample and the acid that has formed are determined by titration with alkali. Also the total added amount of phthalic anhydride in a blank solution is determined in this way. The results allow the calculation of free OH-functionalities in the sample, from which the number of moles of ethoxylated product can be calculated. With the sample weight one can calculate the average molecular weight and, hence, the average number of moles of ethylene oxide groups per mole of initial fatty acid and/or fatty alcohol.

The fatty acid has 10 to 14 carbon atoms, preferably 10 to 12 carbon atoms, most preferably 12 carbon atoms. The fatty acid may be substituted with hydroxy groups. The fatty acid may be saturated or unsaturated, although saturated fatty acids are preferred. Examples of saturated fatty acids with 10 to 14 carbon atoms are decanoic acid (C10), lauric acid (C12), and myristic acid (C14). Decanoic acid and lauric acid are the more preferred fatty acids, with lauric acid being the most preferred since it is obtainable from natural sources.

The fatty aclcohol has 10 to 14 carbon atoms, preferably 10 to 12 carbon atoms, most preferably 12 carbon atoms. The fatty alcohol may be substituted with hydroxy groups. The fatty alcohol may be saturated or unsaturated, although saturated fatty alcohols are preferred. Examples of saturated fatty alcohols with 10 to 14 carbon atoms are decanol (C10), dodecanol/lauric alcohol (C12), and myristic alcohol (C14). Lauric alcohol is the most preferred alcohol since it is obtainable from natural sources.

The ethoxylated fatty acid and/or alcohol can be incorporated in a polymeric film or sheet by first mixing it into molten polypropylene using conventional techniques, such as extrusion, roll-milling or mixing it in a Banbury mixer. The ethoxylated fatty acid and/or alcohol may be added to the polymer before or after said polymer has been melted. It may be added as such, or in the form of a masterbatch. The resulting composition is then solidified by cooling and then comminuted to a particle size satisfactory for further form shaping processes like blown film extrusion, cast film extrusion, hot melt extrusion, or equivalent heat-shaping operations.

It is also possible to incorporate this polypropylene-ethoxylated fatty acid/alcohol composition into a multi-layer system. Such a multi-layer system will contain at least one layer made from this composition. Other layers of such a multi-layer system may be based on, for instance, polyamide (e.g. nylon) and/or polyester (e.g. polyethylene terephthalate), and/or EVA. Multi-layer systems can be prepared by co-extrusion or lamination.

The ethoxylated fatty acid or alcohol is incorporated in the polypropylene in an amount sufficient to impart fog resistance to the film. If an excess amount of ethoxylated fatty acid or alcohol is incorporated in the polypropylene, the polypropylene tends to be tacky and has a greasy feel. The blocking and slip properties of the resulting film or sheet may also be adversely affected. Moreover, an excess of ethoxylated fatty acid and/or alcohol in the film or sheet adversely affects the adhesion of inks thereto.

The ethoxylated fatty acid and/or alcohol is therefore incorporated in the polypropylene film or sheet in a total amount of 0.25-5.0 wt%, preferably 0.5-4.0 wt%, and most preferably 1.0-3.0 wt%.

In addition to the ethoxylated fatty acid and/or alcohol, the polypropylene film or sheet may contain various conventional additives, such as anti-static agents, anti-oxidants, anti-ozonants, slip agents, anti-block agents, light stabilizers (e.g. HALS), UV stabilizers, colorants, tackifiers, and the like, if so desired. Specific examples of additives are ethylene bis-stearamide, ethylene bis-oleamide, erucamides, oleamides, stearamides, and ethoxylated amines.

### EXAMPLES

### Example 1

To a propylene homopolymer (Tartren™ HF322, MFI= 3.2 g/10 min) was added 12 wt% ethoxylated saturated fatty acid, using a 16 mm twin screw extruder at 180-220°C (die). Ethoxylated fatty acids with various average degrees of ethoxylation and various fatty acid chain lengths were used.

The so-formed 12 wt% masterbatches were dry blended with the same polypropylene polymer as mentioned above to form a composition comprising 4 wt% ethoxylated fatty acid in polypropylene. This composition was shaped to form a film using film blowing equipment at 190-220 °C.

Antifog performance was tested as follows:
Beakers of 600 ml (high model, 150 mm, 80 mm ø, without spout) were filled with 350 ml of tap water. Films prepared according to the Examples below were cut and placed on the beaker and fixed with a rubber band. The beakers were placed in a refrigerator at 4°C and fog was determined visually after 2 and 5 hours on the first day; and once a day thereafter.

The Fog Score is the best result obtained over time. It was scored according to the following system:
1 - <3: Opaque layer of small fog droplets
3 - <5: Opaque layer of large droplets
5 - <7: Complete layer of large transparent drops
7 - <8: Randomly scattered or only large transparent droplet(s)/ discontinuous film of water
8: Transparent film having no visible water

Scores within each score range further refine the visibility: the higher the score, the better the visibility.

**Table 1**

| No. of carbon atoms of fatty acid | Average degree of ethoxylation | Cold fog score |
|---|---|---|
| 8 | 1 | 1 |
| 8 | 2 | 1 |
| 8 | 3 | 1 |
| 8 | 4 | 1 |
| 10 | 1 | 3 |
| 10 | 2 | 8.25 |
| 10 | 3 | 7 |
| 10 | 4 | 3 |
| 12 | 1 | 6.25 |
| 12 | 2 | 8.25 |
| 12 | 3 | 7.75 |
| 12 | 4 | 6.25 |
| 14 | 1 | 1.75 |
| 14 | 2 | 8.75 |
| 14 | 3 | 4.25 |
| 14 | 4 | 5.75 |
| 16 | 1 | 2.25 |
| 16 | 2 | 3.75 |
| 16 | 3 | 4.25 |
| 16 | 4 | 3.75 |
| 18 | 1 | 1.75 |
| 18 | 2 | 1.75 |
| 18 | 3 | 2.25 |
| 18 | 4 | 1 |

This Table shows that optimum performance is obtained for C₁₀₋₁₄ ethoxylated fatty acids with an average degree of ethoxylation in the range 2-3.

### Example 2

Example 1 was repeated, except that ethoxylated saturated fatty alcohols were used instead of ethoxylated saturated fatty acids.

The results in the Table below show that optimum performance is obtained for C₁₀₋₁₄ ethoxylated fatty alcohols with an average degree of ethoxylation in the range 2-3.

| No. of carbon atoms of fatty alcohol | Average degree of ethoxylation | Cold fog score |
|---|---|---|
| 8 | 4 | 1 |
| 10 | 3.5 | 8.25 |
| 10 | 5 | 3.75 |
| 10 | 8 | 1 |
| 11 | 2 | 8.25 |
| 11 | 3 | 8.25 |
| 11 | 5 | 6.25 |
| 11 | 7 | 3.75 |
| 11 | 10 | 1 |
| 13 | 1 | 6.25 |
| 13 | 2.78 | 8.75 |
| 13 | 10 | 3 |
| Mixture in the range 10-14 | 3 | 8.25 |
| Mixture in the range 10-14 | 5 | 1.75 |
| Mixture in the range 10-14 | 9.5 | 1 |
| Mixture in the range 12-13 | 2 | 8.25 |
| Mixture in the range 12-14 | 2 | 8.25 |
| Mixture in the range 12-14 | 3 | 8.25 |

### Comparative Example 3

Example 1 was repeated, except that (ethoxylated) glycerol monostearate was used instead of ethoxylated fatty acids. This material showed less good cold fog performance.

| Average degree of ethoxylation | Cold fog score |
|---|---|
| 0 | 3 |
| 0 | 5.50 |
| 1 | 5 |
| 2.5 | 4 |

## Claims

1. Method for preventing fogging at temperatures in the range 0-10°C on a sheet or film made of polypropylene, said method involving the incorporation in said polypropylene of (i) an ethoxylated C₁₀₋₁₄ fatty acid with a molar average degree of ethoxylation in the range 2-3 and/or (ii) an ethoxylated C₁₀₋₁₄ fatty alcohol with a molar average degree of ethoxylation in the range 2-3.

2. Antifog agent according to claim 1 wherein the ethoxylated fatty acid is an ethoxylated fatty acid.

3. Antifog agent according to claim 2 wherein the ethoxylated fatty acid is an ethoxylated saturated fatty acid.

4. Antifog agent according to claim 3 wherein the ethoxylated fatty acid is ethoxylated decanoic acid or ethoxylated lauric acid.

5. Masterbatch of an antifog agent comprising:
- 5-70 wt% of (i) an ethoxylated C₁₀₋₁₄ fatty acid with a molar average degree of ethoxylation in the range 2-3 and/or (ii) an ethoxylated C₁₀₋₁₄ fatty alcohol with a molar average degree of ethoxylation in the range 2-3, and
- 30-95 wt% of a polymeric matrix.

6. Masterbatch according to claim 5 wherein the polymeric matrix is polypropylene.

7. Masterbatch according to claim 5 or 6 wherein the ethoxylated fatty acid is an ethoxylated fatty acid.

8. Masterbatch according to claim 7 wherein the ethoxylated fatty acid is an ethoxylated saturated fatty acid.

9. Masterbatch according to claim 8 wherein the ethoxylated fatty acid is lauric acid.

10. Film or sheet made of polypropylene comprising (i) an ethoxylated C₁₀₋₁₄ fatty acid with a molar average degree of ethoxylation in the range 2-3 and/or (ii) an ethoxylated C₁₀₋₁₄ fatty alcohol with a molar average degree of ethoxylation in the range 2-3.

11. Film or sheet according to claim 10 wherein the ethoxylated fatty acid is an ethoxylated fatty acid.

12. Film or sheet according to claim 11 wherein the ethoxylated fatty acid is an ethoxylated saturated fatty acid

13. Film or sheet according to claim 12 wherein the ethoxylated fatty acid is lauric acid.

14. Food package comprising the film or sheet according to any one of claims 10-13.
